# EUROPEAN PATENT APPLICATION

(11) **EP 4 429 170 A1**
(43) Date of publication of application: **11.09.2024**
(21) Application number: 23160909.0
(22) Date of filing: 09.03.2023
(51) Int. Cl.: H04L 9/40, H04W 12/0431, H04W 12/61, H04W 12/55

(54) **TEMPORARY WIRELESS LOCAL AREA NETWORK ACCESS**

(71) Applicant: Vestel Elektronik Sanayi ve Ticaret A.S., 45030 Manisa (TR)
(72) Inventor: Aygül, Mehmet Ali, 45030 Manisa (TR); Kirisken, Barbaros, 45030 Manisa (TR)
(74) Representative: Grünecker Patent- und Rechtsanwälte PartG mbB

(57) **Abstract**

Embodiments of the present disclosure relates to a communication coordination device, a communication device and an access point (AP) as well as to the corresponding methods and programs. In particular, the communication coordination device is capable of communicating with the AP and a communication device using a wireless local area network, WLAN, and communicating with the communication device using a wireless personal area network, WPAN, separate from the WLAN. It is further configured to establish connection with the communication device via WPAN and control the transceiver to transmit, to the communication device over the WPAN, temporary access data for temporary accessing a service of the AP in the WLAN. Correspondingly, the AP may be configured to receive requests for the temporary access data, generate the temporary access data and provide them to the requested. Correspondingly, the communication device may be capable of receiving the temporary access data via WPAN and connecting temporarily to the WLAN and communicating with the communication coordination device via the temporary WLAN connection.

## Description

The present disclosure relates generally to wireless communication and in particular to accessing a wireless local area network.

### BACKGROUND

Wireless Local Area Networks (WLAN) and Wireless Personal Area Networks (WPAN) have been used for local communication between various kinds of devices. For example, Bluetooth has been employed as a protocol for WPAN communication. On the other hand, IEEE 802.11 standard family has been referred to as Wi-Fi and used in WLANs.

In general, Bluetooth technology enables transferring information between two or more devices that are near each other when speed is not an issue, such as telephones, printers, modems and headsets. It is best suited to low-bandwidth applications like transferring sound data (e.g. with a Bluetooth headset) or byte data (e.g. transferring files) or keyboard / mice / pen control data. In other words, Bluetooth and, in general, WPAN are mainly used for a direct device to device communication. Wi-Fi is better suited for operating local networks because it enables a faster connection, better range from the access point, and better wireless security (if configured properly) than Bluetooth. In this respect, Bluetooth has certain limitations, such as a shorter range and lower bandwidth then Wi-Fi, which make it less suitable for transferring multimedia data including video.

For example, because of the high bandwidth requirements, real-time video transmission and similar applications cannot be conveyed via Bluetooth, which makes its application in multimedia devices less attractive. On the other hand, Bluetooth requires less hardware and less overhead and may thus be preferable for lower bandwidth operation.

### SUMMARY

Methods and techniques are described herein for facilitating employing of both WLAN and WPAN in transmission of data between devices in a coordinated manner.

The invention is defined by the independent claims. Some exemplary implementations are provided by the dependent claims.

For example, a communication coordination device is provided, comprising: a transceiver capable of communicating using a wireless local area network, WLAN, and using a wireless personal area network, WPAN, separate from the WLAN, and processing circuitry configured to: establish connection with a communication device via WPAN; controlling the transceiver to transmit, to the communication device over the WPAN, temporary access data for temporary accessing a service of an access point, AP, in the WLAN.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF DRAWINGS

An understanding of the nature and advantages of various embodiments may be realized by reference to the following figures.
- FIG. 1: is a block diagram illustrating a generic communication system with a transmitter and a receiver.
- FIG. 2: is a block diagram illustrating a communication system architecture including WPAN and WLAN.
- FIG. 3: is a block diagram illustrating an exemplary structure of a WLAN/WPAN capable device employing temporary WLAN access.
- FIG. 4: is a block diagram of a memory of the WLAN/WPAN capable communication coordination device exemplifying its functional structure.
- FIG. 5: is a block diagram of a memory of the WLAN/WPAN capable communication device exemplifying its functional structure.
- FIG. 6: is a block diagram illustrating a communication system architecture including WPAN and WLAN and illustrating a communication flow using temporary WLAN access data.
- FIG. 7: is a flow diagram of methods related to usage of temporary access data for accessing WLAN.

Like reference numbers and symbols in the various figures indicate like elements, in accordance with certain example implementations.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

### Communication system

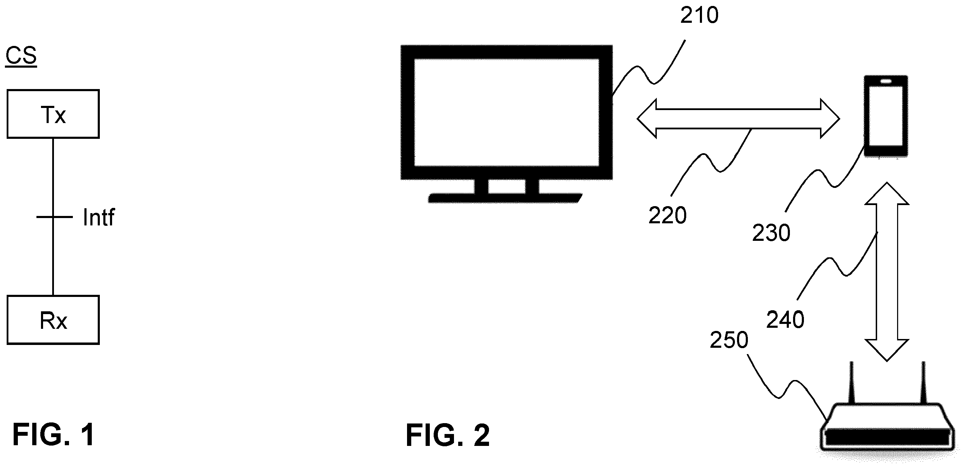

Fig. 1 illustrates an exemplary communication system CS in which Tx represents a transmitter and Rx represents a receiver. The transmitter Tx is capable of transmitting a signal to the receiver Rx over an interface Intf. The interface Intf may be, for instance, a wireless interface. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface Intf implementation. However, it may be applied readily to some existing communication systems as well as to the extensions of such systems, or to new communication systems. Exemplary existing communication systems may be, for instance the 5G New Radio (NR) in its current or future releases, and/or WLAN such as the IEEE 802.11 based systems (e.g. the recently studied IEEE 802.11 be or the like), and/or WPAN such as Bluetooth. For example, Tx and Rx may communicate with each other via the interface Intf that may be Bluetooth and/or Wi-Fi.

Fig. 2 shows a particular example of three devices: a secondary device which may be a display screen 210, a primary device which may be a handheld device 230, and an access point 250 for accessing the WLAN. The display screen 210 may be a monitor connected to a computer or a TV set or a TV screen connected or connectable to a set-top box or the like. In general, the device 21o may be a multimedia device including display output and/or audio output. The handheld device 230 may be a tablet or a smart phone or a similar device. The access point 250 may be WLAN router or gateway or the like.

For example, a device may be paired over a WPAN (e.g. Bluetooth) with another device in order to exchange data. In Fig. 2, the display screen 210 and the handheld device 230 are connected over Bluetooth and may exchange data which is illustrated by an arrow 220. In addition, the handheld device 230 may be connected via WLAN to the access point 250, which may be a WLAN router. This connection is illustrated in Fig. 2 by means of an arrow 240. It is noted that the display screen 210 may also be capable of supporting WLAN.

Because of high bandwidth requirements, real-time video transmission with high resolution and similar applications cannot be transmitted over WPAN such as Bluetooth. For these cases, WLAN can be used. On the other hand, in order to connect to a WLAN, it may be necessary to select a Service Set Identifier (SSID) and possibly to enter a password. An SSID is basically identification (e.g. a name) of the WLAN. If two devices such as the handheld device 230 and the display screen 210 are to communicate via WLAN provided by an access point 250, the SSID and possibly password need to be typically entered to connect both devices. However, it may not be desired to enter the SSID and/or the password on both devices. Moreover, a user may not wish to save the SSID information for later use in one or both devices (210, 230).

This may be for instance the case for devices which have a limited size or functionality due to their size or costs, so that they preferably do not include an input interface suitable for human interaction. For example, in internet of things (IoT), individual connected devices may be desired to be as inexpensive as possible. Therefore, expensive and/or large components like LCDs and keyboards may not be practical to integrate into such individual devices. Thus, an loT device may not have a suitable interface for a person to enter a password and/or an SSID.

Another scenario is given by devices and/or applications in which a high degree of comfort of a user is desirable. For example, it may be desirable for a user not to have to enter the SSID and/or password (one of them or both). Automatic entering may increase usability in interaction with the devices. Still further, a user may want to give access to a guest for a limited time. This can be possible for hotels and restaurants or any other public places.

In order to facilitate cooperation between the WLAN and WPAN devices, the present disclosure considers SSID and/or password sharing for WLAN access. In particular, a primary device 230 paired via Bluetooth 220 with another (secondary) device 210 sends a temporary SSID and/or password to the other device 210. The secondary device 210 can connect to WLAN (e.g. provided by the access point 250) with the temporary SSID and/or password. Therefore, applications that require high bandwidth may be temporarily provided to the secondary device, which does not have a main SSID and/or password information for accessing the WLAN (the access point 250). It is noted that the present disclosure is not limited to the three devices exemplifies in Fig. 2, namely to a screen, a handheld device and a WLAN router. In general, the embodiments and examples of the present disclosure are applicable to any primary and secondary devices that are capable of both WLAN and WPAN communication and to a third device that enables WLAN access.

One of the advantages of providing temporary WLAN access is that the secondary device 210 does not need to store the main WLAN access and that user of the primary device 230 does not need to enter the SSID and/or password into the secondary device 210. Still, the secondary device may use WLAN temporarily, for example in order to boost its available communication data rates or for other purposes.

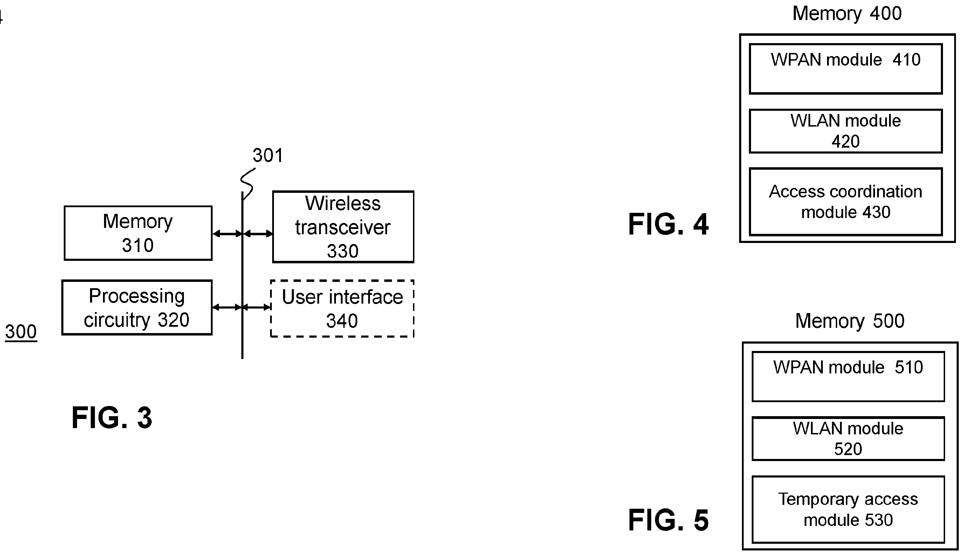

For example, a communication coordination device is provided. The communication coordination device may be the primary device, such as the handheld device 230 mentioned above. An exemplary structure of the communication coordination device is illustrated in Fig. 3. In particular, the communication coordination device 300 comprises a (wireless) transceiver 330 capable of communicating using a wireless local area network, WLAN, as well as capable of using a wireless personal area network, WPAN. The WPAN is separate from the WLAN. Being separate here means that two separate connections must be established, one over the WPAN network and one over the WLAN network.

The communication coordination device 300 comprises further processing circuitry 320 configured to establish connection 220 with a communication device 210 via WPAN and to control the transceiver 330 to transmit, to the communication device 210 over the WPAN, temporary access data for temporary accessing a service of an access point 250, AP, in the WLAN.

The service of an access point 250 may be for instance providing access to the Internet or providing access to another device within the WLAN or the like. Service in the WLAN means that the service is available in (accessible via) the network (WLAN) provided by the AP (access point for that WLAN).

The transceiver 330 may be a transceiver that includes one or more antennas, the corresponding amplifiers and gain controller, modulator, and similar components of the transmitting front end. Specifically, the transceiver is adapted to transmit and/or receive signals over a WLAN and WPAN (in the respective operation bandwidth of the WLAN and the WPAN).

The processing circuitry 320 may include one or more processors and/or programmable hardware and/or application-specific hardware. It is noted that the processing circuitry may be integrated on a chip or distributed on a plurality of chips and/or electronic elements. In some exemplary implementations, the processing circuitry may further include circuitry for baseband processing of the signal for transmission, and more specifically, implement the protocol stack of the WLAN and the WPAN.

When referring to a processing circuitry 320 being configured to perform certain actions or steps of a method, the configuration may be achieved, or instance by programming. For example, the processing circuitry may load a program code from a memory 310 over a bus 301. The memory 310 and the bus 301 may be included in the communication coordination device 300 as exemplified in Fig. 3. The program code may configure the processing circuitry to perform some or all of the actions discussed in the present disclosure. Fig. 4 shows a block diagram of an exemplary functional structure of the memory 400, which may correspond to the memory 310 in Fig. 3. Memory 400 comprises a WPAN module 410, a WLAN module 420, and an access coordination module 430. The WPAN module 410 may configure the processing circuitry or its part to perform WPAN protocol stack functions, e.g. it may implement Bluetooth functionality. The WLAN module 420 may configure the processing circuitry or its part to perform WLAN protocol stack functions, e.g. it may implement functionality of one or more IEEE 802.11 standards. The access coordination module 430 may configure the processing circuitry to perform the above mentioned steps of pairing with the WPAN and/or coordinating the communication by controlling the transceiver 330 to transmit, to the communication device 210, over the WPAN, the temporary access data.

In addition or alternatively, the processing circuitry may be configured by hard-wiring or by hardware programming or by other means corresponding to and suitable for the structure of the processing circuitry.

The communication coordination device 300 may further comprise a user interface 340, which enables a user to interact with the communication coordination device, e.g. to trigger connection and/or communication over the WLAN and/or WPAN with other devices such as the wireless device 210 or the access point 250 or other devices.

At present, when a user / device wishes to connect to a WLAN over an access point (AP) 250, it needs to select an SSID of the AP 250 and, in some cases, enter a password associated with said SSID. Such SSID and/or password may be referred to as access data, and in particular as main access data. In the present disclosure, apart from the main access data, a temporary access data are provided. The temporary access data differs from the main access data in particular in that the validity period of the temporary access data is shorter than the validity of the main access data.

In some exemplary implementations, the main access data may have no validity limit set. However, the present disclosure is not limited to such implementations. It is possible to set a validity limit also for the main access data, e.g. by updating password regularly or periodically or by similar means.

The temporary access data has a limited validity period. This means that the access point 250 grants WLAN access with the temporary access data only during the validity period of the temporary access data and does not grant WLAN access with the temporary access data otherwise. The access point stores the temporary access data in association with the validity period. It is noted that the temporary access data may be also further limited in other ways, e.g. limited to local WLAN access without including internet access or the like.

Correspondingly to the communication coordination device 230, a communication device 210 is provided. The communication device may have a structure similar to the structure of the communication coordination device 230 described above. In particular, it can be or include a device 300 with a wireless transceiver 330 and a processing circuitry 320. It may further include a memory 310 and, optionally, a user interface 340.

In particular, the communication device has the transceiver 330 capable of communicating using a wireless local area network, WLAN, and using a wireless personal area network, WPAN, separate from the WLAN. The communication device has further the processing circuitry 320. However, the processing circuitry is configured differently from the processing circuitry of the communication coordination device 230. Namely, the processing circuitry 330 is configured to:
- connect with a communication coordination device via WPAN;
- control the transceiver to receive, from the communication coordination device over the WPAN, temporary access data for temporary accessing a service of an access point, AP, in the WLAN; and
- connect with the AP using the temporary access data.

Fig. 5 shows functional structure of a memory 500 that includes a WPAN module 510, a WLAN module 520, and a temporary communication module 530. In particular, the temporary communication module 530 may configure the processing circuitry 320 to perform these actions. The WPAN module 510 may configure the processing circuitry or its part to perform WPAN protocol stack functions, e.g. it may implement Bluetooth functionality. The WLAN module 520 may configure the processing circuitry or its part to perform WLAN protocol stack functions, e.g. it may implement functionality of one or more IEEE 802.11 standards. The memory may correspond to the memory 310 when it is used to configure the communication device 210.

As mentioned above, the temporary access data is a temporary Service Set Identifier, SSID, and/or a temporary password. For example, it is possible to have always the same SSID (during normal access and during temporary access), but have a main password and a temporary password. However, it is also possible to have the same password, but use a main SSID for the normal access and a temporary SSID for the temporary access. Finally, it is possible to have main SSID and password and a temporary SSID any password. The present disclosure is not limited to SSID and password as access data. Further access data (alternatively or in addition to the SSID and/or password) may be used, such as access key or the like.

As mentioned above, the WLAN may use a protocol of IEEE 802.11 standard family such as IEEE 802.11a/b/g/n/ac/ad/x/be or the like. The WPAN may use a BlueTooth protocol (any version of Bluetooth). However, the present disclosure is not limited to WiFi and Bluetooth. Other protocols, may be used for WLAN and other protocols such as Zigbee or the like may be used for WPAN.

For example, said communication coordination device 230 is a mobile phone (e.g. a smartphone) and said communication device 210 is a display screen device. For example, it enables a user of a mobile phone to control screen by using temporary access to the WLAN and to display then content from the mobile phone on such screen even if the content cannot be conveyed directly from the mobile phone to the screen due to bandwidth limitations. As mentioned above, this example is not to limit the present disclosure and devices other than a screen and a mobile phone may be used such as loT devices, for example speakers, headphones, car media systems, wearables, game controllers, printers, medical devices or the like.

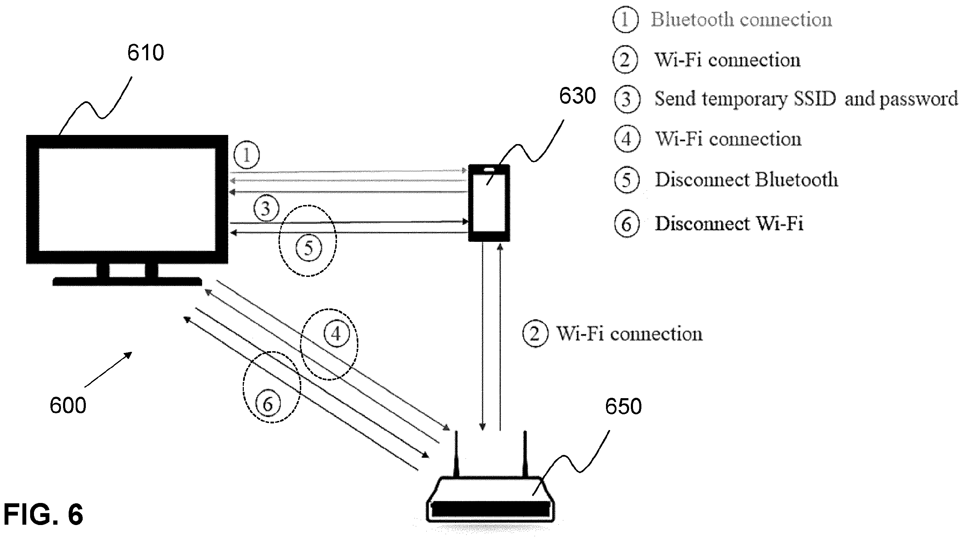

Fig. 6 shows an exemplary system 600 including a communication coordination device 630 and a communication device 610, as well as an access device 650. Arrows between the devices illustrate communication. In particular, the communication coordination device 630 and the communication device 610 are both WPAN capable devices, in this particular example, Bluetooth capable devices. A connection between these two Bluetooth capable devices is established, which is indicated by first two arrows under a "1" in a circle. The two arrows indicate that the two devices 610 and 630 have established connection between them, e.g. were paired according to the Bluetooth protocol.

Moreover, there is a WiFi connection between the communication coordination device 630 (in the following also referred to as phone for simplicity) and the access device 650 (e.g. an AP). This connection is denoted by two arrows beside a "2" in a circle. Such connection may correspond to a connection to the WLAN. For example, the phone 630 connects to the AP 650 by selecting the main SSID and (optionally) entering a main password. However, the phone 630 does not have to use the main access data, Rather, the phone may also obtain and use temporary access data. The temporary access data used by the phone 630 may be the same as or differ from the temporary access data used by the screen 610.

The AP 650 checks the main access data and if the access data are valid, connection between the AP 650 and the communication coordination device, e.g. the phone 630 is established. Via this connection, the phone 630 may obtain temporary access data from the AP 650.

Then, the phone 630 sends the temporary SSID and/or password to the screen 610 via the WPAN (Bluetooth) connection. This is illustrated by the third arrow (counted from the top between the communication device 610 and the communication coordination device 630) leading from the communication coordination device 630 to the communication device 610. The third arrow is denoted as "3" in a circle. Afterwards, the communication device (here e.g. a screen such as a TV) is capable of using the WLAN thanks to the temporary SSID and/or password, i.e. is capable of connecting to the AP 650 using the temporary access data. This is illustrated by two arrows denoted as "4" in a circle and crossed by a dashed circle in Fig. 6. Accordingly, the phone 630 may now transmit content to the screen 610 via the AP 650. Thus, it is possible to exchange even a high-bandwidth content in real-time between the screen 610 and the phone 630.

In one possible scenario, after some time, the Bluetooth connection between the screen 610 and the phone 630 is cut. This is illustrated by two arrows labeled by "5" in a circle and by a dashed circle crossing them in Fig. 6. The reason for cutting of the connection may be any reason. For example, the phone 630 can be moved away from the screen 610, so that the connection between them is cut or the phone (user of the phone manually or an application running on the phone) cuts the connection or the like.

The temporary access data may become invalid for instance when the usage of temporary access takes too long (longer then the period for which they are valid) and/or when some anomaly is detected (such as when the number of connections has increased too much which may be checked by a comparison with a preconfigure threshold). The temporary access data may become invalid by an intervention of a user, e.g. when an AP user manually changes its security conditions, e.g., after some time the user may deactivate the feature of temporary access data provision and/or cancel any temporary connections or the like.

Then, when the Bluetooth connection is cut between the screen 610 and the phone 630, the connection between the screen 610 and the AP 650 can be also cut. This is illustrated by two arrows labeled by "6" in a circle and cur by a dashed circle. The cutting of the connection between the screen 610 and the AP 650 can be performed by the AP 650 by no longer accepting the temporary SSID and/or password.

For example, the temporary SSID and/or password will expire when the Bluetooth connection is terminated as mentioned above or the main SSID and password are requested by the phone 630 (if it uses a temporary access) or by the screen 610. (It is noted that some users / applications may accept only the main SSID and/or password.) For example, the phone 630 can store the temporary access data (e.g. the SSID and/or password) given to the Bluetooth user (610, in this example, it is a television screen) for example in its database. After the Bluetooth connection between the screen 610 and the phone 630 is terminated, the phone 630 can notify the AP 650 to remove these temporary access data (e.g. the SSID and/or password) from its (AP's) database.

As mentioned above, the temporary SSID and/or password will expire when the Bluetooth connection is terminated. This is because there may be no Bluetooth device to connect the screen 610 to the WLAN. To use a WLAN connection, the screen may then still ask for (entry of) a main password and/or a main SSID.

It is noted that even if the Bluetooth connection between the screen 610 and phone 630 is cut, the WiFi connection between the AP 650 and the screen 610 can be continued until the temporary SSID and password become invalid.

The communication coordination device (e.g. phone) or its processing circuitry 320 may be further configured to connect to the AP 650 over WLAN using access data different from the temporary access data, and to obtain the temporary access data from the AP 650 via WLAN.

The AP 650 may provide a service of providing the temporary access date by way of a proprietary implementation or as a standardized feature. For example, in IEEE 802.11u, there are some features that may offer temporary access. Here, a device, e.g., a mobile phone, uses Internet via the AP, and it can share its Internet with others. On the other hand, in the embodiments described above the mobile phone 630 may have Internet access over the AP 650 (but does not have to have it) and shares only the access data (e.g. temporary SSID and/or password information) with other one or more devices.

In the communication coordination device 630, the processing circuitry 320 can be configured to, after the communication device 610 has established connection with the AP 650 using said temporary access data, control the transceiver 330 (of the communication coordination device) to transmit data to the communication device 610 over the WLAN via the AP 650, and/or receive data from the communication device 610 over the WLAN via the AP 650.

Similarly, in the communication device 610, the processing circuitry 320 can be configured to, after the communication device 610 has established connection with the AP 650 using said temporary access data, control the transceiver 330 (of the communication device) to transmit data to the communication coordination device 630 over the WLAN via the AP 650, and/or receive data from the communication coordination device 630 over the WLAN via the AP 650.

In the communication coordination device 630, the processing circuitry 320 can be configured to, when said connection with the communication device via WPAN is terminated, control the transceiver 330 to notify the AP that the temporary access data are invalid.

In addition or alternatively, the WLAN connection of the communication device 610 (screen) may be terminated when its WPAN connection is terminated. This may be achieved by the corresponding configuration at the communication device 610 or at the AP 650.

In summary, in the present disclosure, several features have been provided. For example, a feature is provided of, while connected to a Bluetooth device, sending a temporary SSID and/or password for accessing a WLAN to that Bluetooth device. This enables to the Bluetooth device connecting to the WLAN without knowing a main SSID and/or password and without having to enter the main SSID and/or password manually. Moreover, terminating Wi-Fi connection may be supported, after the Bluetooth connection is terminated. The AP may enable requesting a temporary SSID and/or password from the AP.

It is noted that it is, in general, not necessary to change a WLAN protocol in order to implement the above mentioned examples of the present disclosure. The AP may be programmed by an application which enables such functionality. However, in the future, there may be enhancements in standards to define an interface for providing temporary access data or the like.

The present disclosure also provides an access point 650 for providing a Wireless Local Area Network, WLAN, access to a communication coordination device 630 (and possibly to a communication device 610). In other words, the AP 650 provides access to the WLAN to devices other than itself. The access point comprises a transceiver capable of communicating using a wireless local area network, WLAN. The structure of the AP 650 may be similar as the structure of the device 300 shown in Fig. 3. In particular, the transceiver of the AP may be same or similar as the transceiver 330 described with reference to Fig. 3 and the communication coordination device.

The access point 650 comprises further processing circuitry configured to:
- receive, via the transceiver (of the AP), from the communication coordination device a request for providing temporary access data for temporary accessing a service of the access point in the WLAN;
- generating the temporary access data; and
- controlling the transceiver to transmit the temporary access data to the communication coordination device via the WLAN.

The processing circuitry of the AP may be same or similar in physical structure as the processing circuitry 320 described with reference to Fig. 3 and the communication coordination device. However, the processing circuitry of the AP would be configured differently, as mentioned above, namely for receiving a request for provision of the temporary access data, generating the temporary access data and providing them to the requester. This configuration may be also implemented by a memory 310, which may include a corresponding temporary access provision module and a WLAN module (similar to the WLAN modules 420 and 520).

Generating of the temporary access data may include a random password generator. In addition or alternatively, it may include a random SSID generator. However, the present disclosure is not limited thereto and the SSID / password may be generated in any other way. The requesting and providing of the access data may be implemented by way of an application (i.e. not a part of the WLAN stack) running on the AP and on the communication coordination device or the like.

In addition to the above mentioned devices, the present disclosure also provides the corresponding methods that include steps corresponding to the actions described as performed by the device above.

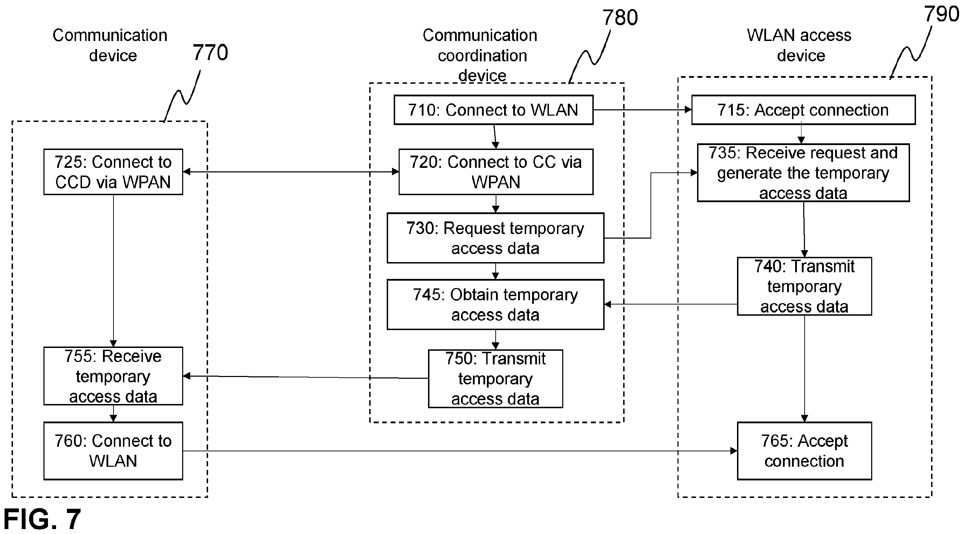

Fig. 7 a flowchart of steps of a method 770 performed e.g. by a communication device 610, a method 780 performed e.g. by a communication coordination device 630, and a method 790 performed e.g. by a WLAN access device 650.

The method 780 comprises a step 710 of connecting to a wireless local area network, WLAN. This may include connection with the AP 650. The method 770 further comprises a step 720 of establishing connection with the communication device 610 via a wireless personal area network, WPAN, separate from the WLAN. The establishing connection may be pairing via Bluetooth. It is immaterial for the present disclosure, which of the devices initiates the pairing.

The method 780 may include requesting 730 of temporary access data from the AP 650 and receiving 745 the temporary access data from the AP 650. However, it is not necessary that these steps be performed after step 720, or at all in method 780. The temporary access data could be in general pre-stored or generated /derived at the communication coordination device (in coordination with the AP) or the like.

The method 780 further comprises a step 750 of transmitting, to the communication device over the WPAN, temporary access data for temporary accessing a service of an access point, AP, in the WLAN.

The method 770 comprises a step 725 of connecting with the communication coordination device via a wireless personal area network, WPAN. As mentioned above, the connection may be pairing via Bluetooth. It is immaterial for the present disclosure, which of the devices (610, 630) initiates the pairing. The method 770 further comprises a step 755 of receiving, from the communication coordination device over the WPAN, temporary access data for temporary accessing a service of an access point, AP, in a wireless local area network, WLAN. Finally, step 760 of connecting with the AP using the temporary access data is performed.

It is noted that step 755 of receiving the temporary access data may be a response to a request sent by the communication device to the communication coordination device. Alternatively, the communication coordination device may instruct the communication device to switch to WLAN.

After connecting to the WLAN, communication (transmission, reception) of data between the AP and the connected device may follow.

The method 790 may include a step 715 of accepting connection (e.g. after verification of the access data provided by the communication coordination device in step 710 when trying to connect to the WLAN) from the communication coordination device.

The method 790 includes a step 735 of receiving (e.g. from the communication coordination device) a request for providing temporary access data for temporary accessing a service of the access point in the WLAN. Then the step 735 includes generating the temporary access data. The method 790 further includes a step 740 of transmitting the temporary access data to the communication coordination device via the WLAN.

The method 790 may include a step 765 of accepting connection (e.g. after verification of the temporary access data provided by the communication device in step 760 when trying to connect to the WLAN) from the communication device.

As mentioned above in connection with the memory 310, the present disclosure provides a program code stores on a non-transitory medium such as in memory or in another kind of computer-readable storage. The program code includes code instructions, which when executed by processing circuitry (e.g. by one or more processors) causes the processing circuitry to perform step of any one of the above described methods (e.g. 770, 780, 790).

Summarizing, in the prior art, typically one SSID is used to connect to an AP. However, in some embodiments of the present disclosure, there may be a usual (main) SSI D, while temporary SSIDs are generated to connect the AP with devices (e.g. screen) which are already connected with another device (e.g. Mobile phone) which is connected to the AP. In addition or alternatively to the temporary SSID, a temporary password may be provided or another kind of access data. Also, a temporary SSID may be generated and sent to the other device (phone) by the AP, so the device (screen) does not need to know or enter the SSID.

### Implementations in software and hardware

It is noted that although embodiments and examples of the present disclosure were provided in terms of a method above, the corresponding devices providing the functionality described by the methods are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The above examples are not to limited the present disclosure. There are many modifications and configurations, which may be used in addition or alternatively. This present disclosure can be used in any kind of device that is receiving signals over a wireless channel. The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

### Selected embodiments and examples

According to a first aspect, a communication coordination device is provide, comprising a transceiver capable of communicating using a wireless local area network, WLAN, and using a wireless personal area network, WPAN, separate from the WLAN, and processing circuitry configured to: (i) establish connection with a communication device via WPAN; and (ii) controlling the transceiver to transmit, to the communication device over the WPAN, temporary access data for temporary accessing a service of an access point, AP, in the WLAN.

According to a second aspect, in addition to the first aspect, the temporary access data is a temporary Service Set Identifier, SSID, and/or a temporary password.

According to a third aspect, in addition to the first aspect or to the second, the processing circuitry configured to: (i) connect to the AP over WLAN using access data different from the temporary access data, and (ii) obtain the temporary access data from the AP via WLAN.

According to a fourth aspect, in addition to any of the first aspect to the third aspect, the processing circuitry is configured to, after the communication device has established connection with the AP using said temporary access data, control the transceiver to: (i) transmit data to the communication device over WLAN via the AP, and/or (ii) receive data from the communication device over WLAN via the AP.

According to a fifth aspect, in addition to any of the first aspect to the fourth aspect, the processing circuitry is configured to, when said connection with the communication device via WPAN is terminated, control the transceiver to notify the AP that the temporary access data are invalid.

According to a sixth aspect, in addition to any of the first aspect to the fifth aspect, the WLAN uses a protocol of IEEE 802.11 standard family and/or the WPAN uses a BlueTooth protocol.

According to a seventh aspect, in addition to any of the first aspect to the sixth aspect, said communication coordination device is a mobile phone and said communication device is a screen device.

According to an eighth aspect, a communication device is provided, comprising a transceiver capable of communicating using a wireless local area network, WLAN, and using a wireless personal area network, WPAN, separate from the WLAN, and processing circuitry configured to: (i) connect with a communication coordination device via WPAN; (ii) control the transceiver to receive, from the communication coordination device over the WPAN, temporary access data for temporary accessing a service of an access point, AP, in the WLAN; and (iii) connect with the AP using the temporary access data.

According to a ninth aspect, in addition to the eighth aspect, the temporary access data is a temporary Service Set Identifier, SSID, and/or a temporary password.

According to a tenth aspect, in addition to the eighth aspect or the ninth aspect, the processing circuitry is configured to control the transceiver to: (i) transmit data to the communication coordination device over WLAN via the AP, and/or (ii) receive data from the communication coordination device over WLAN via the AP.

According to a eleventh aspect, in addition to any of the eighth aspect to the tenth aspect, the WLAN uses a protocol of IEEE 802.11 standard family and/or the WPAN uses a BlueTooth protocol.

According to a twelfth aspect, in addition to any of the first eighth to the eleventh aspect, said communication coordination device is a mobile phone and said communication device is a screen device.

According to a thirtieth aspect, an access point is provided for providing a Wireless Local Area Network, WLAN, access to a communication coordination device, the access point comprising: a transceiver capable of communicating using a wireless local area network. WLAN; and processing circuitry configured to: (i) receive, via the transceiver, from the communication coordination device a request for providing temporary access data for temporary accessing a service of the access point in the WLAN; (ii) generating the temporary access data; and (iii) controlling the transceiver to transmit the temporary access data to the communication coordination device via the WLAN.

According to a fourteenth aspect, a method is provided for coordinating communication with a communication device, the method comprising the steps of connecting to a wireless local area network, WLAN; establishing connection with the communication device via a wireless personal area network, WPAN, separate from the WLAN; and transmitting, to the communication device over the WPAN, temporary access data for temporary accessing a service of an access point, AP, in the WLAN.

According to a fifteenth aspect, a method is provided for communication with a communication coordination device, the method comprising: connecting with the communication coordination device via a wireless personal area network, WPAN; receiving, from the communication coordination device over the WPAN, temporary access data for temporary accessing a service of an access point, AP, in a wireless local area network, WLAN; and connecting with the AP using the temporary access data.

According to a sixteenth aspect, a method is provided for providing a Wireless Local Area Network, WLAN, access over a communication coordination device to a communication device, the method comprising: receiving, via the transceiver, from the communication coordination device a request for providing temporary access data for temporary accessing a service of the access point in the WLAN; generating the temporary access data; and transmitting the temporary access data to the communication coordination device via the WLAN.

The method of the fourteenth aspect may further include features and steps mentioned as performed by the communication coordination device or by its processing circuitry. The method of the fifteenth aspect may further include features and steps mentioned as performed by the communication device or by its processing circuitry. The method of the sixteenth aspect may further include features and steps mentioned above as performed by the AP or by its processing circuitry. Moreover, methods may be provided for a system including the communication device and the communication coordination device (and possibly also the AP), the methods comprising the steps performed by the communication device and the communication coordination device (and possibly also the AP) including their interactions as illustrated with reference to Fig. 7. According to a seventeenth aspect, a program is provided including program code instructions stored on a non-transitory computer-readable medium which when executed on one or more processors cause the one or more processors to perform the steps of a method according to any one of the above mentioned methods.

Summarizing, some embodiments of the present disclosure relates to a communication coordination device, a communication device and an access point (AP) as well as to the corresponding methods and programs. In particular, the communication coordination device is capable of communicating with the AP and a communication device using a wireless local area network, WLAN, and communicating with the communication device using a wireless personal area network, WPAN, separate from the WLAN. It is further configured to establish connection with the communication device via WPAN and control the transceiver to transmit, to the communication device over the WPAN, temporary access data for temporary accessing a service of the AP in the WLAN. Correspondingly, the AP may be configured to receive requests for the temporary access data, generate the temporary access data and provide them to the requested. Correspondingly, the communication device may be capable of receiving the temporary access data via WPAN and connecting temporarily to the WLAN and communicating with the communication coordination device via the temporary WLAN connection.

## Claims

1. A communication coordination device, comprising:
a transceiver capable of communicating using a wireless local area network, WLAN, and using a wireless personal area network, WPAN, separate from the WLAN, and
processing circuitry configured to:
• establish connection with a communication device via WPAN;
• controlling the transceiver to transmit, to the communication device over the WPAN, temporary access data for temporary accessing a service of an access point, AP, in the WLAN.

2. The communication coordination device according to claim 1, wherein the temporary access data is a temporary Service Set Identifier, SSID, and/or a temporary password.

3. The communication coordination device according to claim 1 or claim 2, wherein the processing circuitry configured to:
• connect to the AP over WLAN using access data different from the temporary access data, and
• obtain the temporary access data from the AP via WLAN.

4. The communication coordination device according to any of claim 1 to 3, wherein the processing circuitry is configured to, after the communication device has established connection with the AP using said temporary access data, control the transceiver to:
transmit data to the communication device over WLAN via the AP, and/or
receive data from the communication device over WLAN via the AP.

5. The communication coordination device according to any of claims 1 to 4, wherein the processing circuitry is configured to, when said connection with the communication device via WPAN is terminated, control the transceiver to notify the AP that the temporary access data are invalid.

6. The communication coordination device according to any of claims 1 to 5, wherein the WLAN uses a protocol of IEEE 802.11 standard family and/or the WPAN uses a BlueTooth protocol.

7. The communication coordination device according to any of claims 1 to 6, wherein said communication coordination device is a mobile phone and said communication device is a screen device.

8. A communication device comprising:
a transceiver capable of communicating using a wireless local area network, WLAN, and using a wireless personal area network, WPAN, separate from the WLAN, and
processing circuitry configured to:
• connect with a communication coordination device via WPAN;
• control the transceiver to receive, from the communication coordination device over the WPAN, temporary access data for temporary accessing a service of an access point, AP, in the WLAN; and
• connect with the AP using the temporary access data.

9. The communication device according to claim 8, wherein the temporary access data is a temporary Service Set Identifier, SSID, and/or a temporary password.

10. The communication device according to claim 8 or claim 9, wherein the processing circuitry is configured to control the transceiver to:
transmit data to the communication coordination device over WLAN via the AP, and/or
receive data from the communication coordination device over WLAN via the AP.

11. The communication device according to any of claims 8 to 10, wherein the WLAN uses a protocol of IEEE 802.11 standard family and/or the WPAN uses a BlueTooth protocol.

12. The communication device according to any of claims 8 to 11, wherein said communication coordination device is a mobile phone and said communication device is a screen device.

13. An access point for providing a Wireless Local Area Network, WLAN, access to a communication coordination device, the access point comprising:
a transceiver capable of communicating using a wireless local area network, WLAN; and
processing circuitry configured to:
- receive, via the transceiver, from the communication coordination device a request for providing temporary access data for temporary accessing a service of the access point in the WLAN;
- generating the temporary access data; and
- controlling the transceiver to transmit the temporary access data to the communication coordination device via the WLAN.

14. A method for coordinating communication with a communication device, the method comprising:
connecting to a wireless local area network, WLAN;
establishing connection with the communication device via a wireless personal area network, WPAN, separate from the WLAN; and
transmitting, to the communication device over the WPAN, temporary access data for temporary accessing a service of an access point, AP, in the WLAN.

15. A method for communication with a communication coordination device, the method comprising:
connecting with the communication coordination device via a wireless personal area network, WPAN;
receiving, from the communication coordination device over the WPAN, temporary access data for temporary accessing a service of an access point, AP, in a wireless local area network, WLAN; and
connecting with the AP using the temporary access data.
